## Europäisches Patentamt
## European Patent Office
## Office européen des brevets

(19)

(11) Numéro de publication: **0 006 797**
**B1**

(12) # FASCICULE DE BREVET EUROPEEN

(45) Date de publication du fascicule du brevet:
07.03.84

(51) Int. Cl.³: **G 02 F 1/17**

(21) Numéro de dépôt: **79400392.1**

(22) Date de dépôt: **14.06.79**

(54) Cellule d'affichage électrolytique à électrode de référence et à tension d'effacement asservie.

(30) Priorité: **19.06.78 FR 7818224**

(43) Date de publication de la demande:
**09.01.80 Bulletin 80/1**

(45) Mention de la délivrance du brevet:
**07.03.84 Bulletin 84/10**

(84) Etats contractants désignés:
**AT CH DE GB IT NL SE**

(56) Documents cités:
**DE - A - 2 741 702**
**FR - A - 2 260 167**
**US - A - 3 096 271**
**US - A - 4 045 791**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Delapierre, Gilles, 216 Percevalière, F-38170 Seyssinet (FR)**
Inventeur: **Meyer, Robert, Chemin Bonatière Saint Nazaire Les Eyms, F-38330 Saint Ismier (FR)**

(74) Mandataire: **Mongrédien, André et al, c/o BREVATOME 25, rue de Ponthieu, F-75008 Paris (FR)**

Cellule d'Affichage electrolytique a Electrode de Reference et a Tension d'Effacement asservie

La présente invention a pour objet une cellule d'affichage électrolytique à électrode de référence et à tension d'effacement asservie. Elle trouve une application à l'affichage de caractères alphanumériques ou autres.

Une cellule d'affichage électrolytique comprend, très schématiquement, un électrolyte (généralement un sel métallique) inséré entre des électrodes semi-transparents de forme appropriée et une contre-électrode. Une source de tension permet de porter les électrodes à des potentiels déterminés, dans le but de provoquer soit le dépôt d'un film métallique (pour l'affichage d'un caractère) soit la redissolution de ce film (pour l'effacement du caractère affiché).

La tension d'effacement doit être contrôlée avec précision car la qualité de l'affichage en dépend. En effet, dans de tels moyens d'affichage, l'épaisseur du film métallique déposé est directement proportionelle à la charge électrique qui a traversé la cellule et l'effacement de ce film nécessite qu'une charge égale traverse la cellule, mais en sens contraire. Un défaut de charge à l'effacement conduit à une accumulation de métal sur l'électrode et, inversement, un excès de charge à l'effacement peut conduire à des réactions secondaires dans l'électrolyte.

Or, les courants et les tensions appliqués à une cellule d'affichage électrolytique sont susceptibles de varier lorsque les conditions opératoires se modifient (avec la température notamment) ou lorsque la cellule elle-même se modifie (dans la composition de son électrolyte par exemple) ou encore lorsqu'on passe d'une cellule à une autre, du fait des dispersions qui peuvent affecter certains composants (notamment l'état de surface des électrodes), ou enfin lorsque, pour une même cellule, on change l'électrolyte. Il est alors difficile, dans la pratique, de maintenir la tension d'effacement à sa valeur appropriée.

L'invention résout ce problème en prévoyant un moyen apte à traduire l'état de la cellule en une grandeur à laquelle on peut asservir la tension d'effacement. Ce moyen est constitué par une électrode de référence disposée dans la cellule et par un générateur de courant continu relié à cette électrode et permettant à un courant de référence de traverser la cellule.

On connaît déjà des dispositifs d'affichage qui sont munis d'une électrode de référence. Le document FR-A-2 260 167 décrit un dispositif électro-optique d'affichage à mémoire utilisant un électrolyte solide. Il comprend des électrodes de référence placées à proximité immédiate d'électrodes de commande. Les électrodes de référence sond plongées dans l'électrolyte solide et sont reliées à un circuit électronique de contrôle. Ce circuit permet de réguler les tensions de polarisation des électrodes de commande. Cette disposition est prise pour éviter que des tensions excessives soient appliquées, qui décomposeraient l'électrolyte solide. Les électrodes de référence servent donc de repères de tension.

Le document US-A-3 096 271 décrit un dispositif d'affichage électrolytique dans lequel il est prévu une électrode de référence qui plonge dans le bain électrolytique entre les électrodes de travail.

La fonction de cette électrode de référence est celle des électrodes de référence au sens électrochimique du terme, à savoir de fixer un potentiel de référence à partir duquel on peut mesurer les potentiels d'électrodes plongées dans la même solution.

Enfin, le document DE-A-2 741 702 décrit une cellule d'affichage électrochrome dans laquelle est disposée une électrode de référence. Il existe en outre une électrode de travail et une contre-électrode. L'électrode de référence est reliée à l'entrée inverseuse d'un amplificateur opérationnel dont l'entrée positive est reliée à des sources de tensions continues.

Les électrodes de référence mentionnées dans cette demande de brevet constituent des moyens permettant de repérer les potentiels appliqués aux électrodes de travail. Il s'agit donc, là encore, d'électrodes de référence au sens classique de l'électrochimie.

Ainsi, selon cet art antérieur, les électrodes de référence servent toujours à donner une référence pour les potentiels à appliquer. Dans l'invention, l'électrode de référence a une fonction différente car elle sert à faire circuler un courant à travers la cellule, ce qui permet, à l'aide d'un amplificateur différentiel de créer une tension d'effacement, laquelle sera asservie au courant de référence et pourra donc être réglée une fois pour toutes, en dépit des variations des caractéristiques de la cellule.

Dans le cas des cellules où la solution électrolytique comprend un halogénure métallique (l'iodure d'argent par exemple), il est avantageux d'appliquer aux électrodes à effacer une tension légèrement supérieure à la tension de seuil de formation électrochimique de l'halogène. Dans ce cas en effet, tant que le métal est présent sur l'électrode, la dissolution a lieu sous un courant relativement élevé (la surtension de dissolution des métaux utilisés, l'argent notamment, est pratiquement nulle), et dès que la dissolution est achevée, le courant tombe à une valeur très faible.

Ce mode de commande de l'effacement d'une cellule d'affichage électrolytique fait l'objet de la demande de brevet européen 0 006 797.

Il y est décrit un procédé de commande dans lequel on applique en permanence à l'électrode à effacer une tension voisine de la tension de formation électrochimique de l'halogène de l'électrolyte.

Or, ce procédé de commande se heurte à une difficulté de mise en œuvre qui tient à ce que les courants utilisés sont faibles (de l'ordre de 0,1 μA/mm$^2$) et varient très rapidement avec la tension appliquée et la température (d'un facteur 10 pour une variation de tension de 50 mV ou pour une variation de température de 30°C). Ces courants varient également d'une cellule à l'autre pour une même tension appliquée.

Si le courant correspondant à la formation d'iode est trop faible, il peut y avoir accumulation d'argent. S'il est trop fort, il peut y avoir inhomogénéité d'aspect ou consommation excessive dans certaines applications. Par exemple, si l'on passe de 0,1 à 1 $\mu A/mm^2$, la consommation d'un afficheur de montre augmente de 15 $\mu A$ alors que la consommation totale généralement admise est de l'ordre de 10 $\mu A$.

L'invention remédie à cet inconvénient car elle permet d'asservir la tension d'effacement à la valeur souhaitée, de telle sorte qu'elle reste toujours voisine de la tension de seuil de formation électrochimique de l'halogène, en dépit des fluctuations qui peuvent affecter les conditions de fonctionnement de la cellule.

De façon précise, l'invention a pour objet une cellule d'affichage électrolytique comprenant un film de solution électrolytique inséré entre des électrodes d'affichage semitransparentes et une contre-électrode, une source de tension négative d'écriture, des moyens de formation d'une tension d'effacement positive et des organes de commutation apte à relier chaque électrode soit à la source de tension négative soit aux moyens de formation de la tension d'effacement, cette cellule étant caractérisée en ce que ces moyens de formation de la tension d'effacement comprennent une électrode de référence disposée dans la cellule comme les électrodes d'affichage, un générateur de courant de référence continu relié à l'électrode de référence et qui délivre à travers cette électrode et la cellule un courant continu de sens tel que la tension de l'électrode de référence soit positive, un amplificateur différentiel ayant une entrée reliée à l'électrode de référence et une sortie, cette sortie délivrant ladite tension positive d'effacement, laquelle est asservie au courant de référence traversant la cellule, le courant de référence étant réglé pour que la tension d'effacement ait une valeur appropriée.

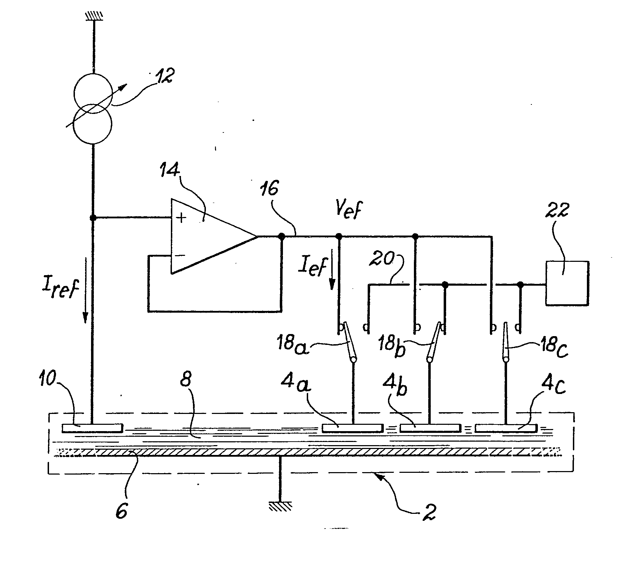

De toute façon, les caractéristiques et avantages de l'invention apparaîtront mieux après la description qui suit, d'un exemple de réalisation donné à titre explicatif et nullement limitatif. Cette description se réfère à une figure unique qui est annexée et qui représente un mode particulier de réalisation du dispositif de l'invention.

La cellule d'affichage électrolytique 2 représentée sur cette figure comprend, de manière connue, des électrodes transparentes 4a, 4b, 4c, une contre-électrode 6 et un film 8 de solution électrolytique. Selon l'invention, la cellule 2 comprend en outre une électrode 10 de référence, et des moyens aptes à mesurer l'impédance de la cellule à travers cette électrode. Sur la figure, ces moyens sont constitués par une source de courant 12, qui délivre un courant de référence $I_{ref}$ à travers l'électrode 10, et par un amplificateur différentiel 14 dont l'entrée non inverseuse est reliée à l'électrode de référence 10 et l'entrée inverseuse à la sortie 16. Cette sortie délivre une tension d'effacement Vef qui est asservie à la tension appliquée à l'électrode, donc finalement au courant de référence $I_{ref}$ traversant la cellule. Chaque électrode de travail 4a, 4b, 4c est réunie par des organes de commutation respectivement 18a, 18b, 18c, soit à la sortie 16 lorsque cette électrode doit être effacée (c'est le cas de l'électrode 4a), soit à une connexion 20 reliée à la sortie d'une source 22 de tension négative d'écriture, lorsque l'électrode doit être décrite (c'est le cas de l'électrode 4b), soit reste «en l'air» en cas de maintien de l'état écrit (c'est le cas de l'électrode 4c).

Le circuit représenté permet d'obtenir une tension d'effacement Vef qui est toujours égale à la valeur qui donne à la densité de courant d'effacement permanent Ief circulant à travers l'électrode de travail, lorsque tout l'argent a disparu, une valeur égale à la valeur de référence $I_{ref}$ et cela quels que soient l'environnement de la cellule d'affichage et la dispersion de ses caractéristiques.

Naturellement, il est avantageux d'utiliser une générateur de courant d'effacement 12 réglable, afin de pouvoir ajuster la valeur du courant de référence, donc finalement la tension d'effacement.

### Revendication

1. Cellule d'affichage électrolytique comprenant un film (8) de solution électrolytique inséré entre des électrodes d'affichage semitransparentes (4a, 4b, 4c) et une contre-électrode (6), une source de tension négative d'écriture (22), des moyens de formation d'une tension d'effacement positive et des organes de commutation (18a, 18b, 18c) apte à relier chaque électrode d'affichage (4a, 4b, 4c) soit à la source de tension négative (22), soit aux moyens de formation de la tension d'effacement, caractérisée en ce que ces moyens de formation de la tension d'effacement comprennent une électrode de référence (10) disposée dans la cellule comme les électrodes d'affichage, un générateur de courant de référence ($I_{ref}$) continu (12) relié à l'électrode de référence et qui délivre à travers cette électrode et la cellule un courant continu de sens tel que la tension de l'électrode de référence soit positive, un amplificateur différentiel (14) ayant une entrée reliée à l'électrode de référence et une sortie (16), cette sortie délivrant ladite tension positive d'effacement Vef, laquelle est asservie au courant de référence ($I_{ref}$) traversant la cellule, le courant de référence ($I_{ref}$) étant réglé pour que la tension d'effacement ait une valeur appropriée.

### Patentanspruch

Elektrolytische Anzeigezelle, mit einer Schicht (8) einer elektrolytischen Lösung, die zwischen halbdurchscheinenden Anzeigeelektroden (4a, 4b, 4c) und einer Gegenelektrode (6) eingebracht ist, einer negativen Spannungsquelle zum Schreiben (22), Mitteln zum Erzeugen einer positiven Löschspannung und Umschaltorganen (18a, 18b, 18c), mit denen jede Anzeigeelektrode (4a, 4b, 4c) entweder mit der negativen Spannungsquelle (22) oder den Mitteln zum Erzeugen der Löschspannung verbindbar ist, dadurch gekennzeichnet, dass diese Mittel zum Erzeugen der Löschspannung umfassen eine in der Zelle wie die Anzeigeelektroden angeordnete Bezugselektrode (10), einen Generator (12) für einen Bezugsgleichstrom ($I_{ref}$), der mit der Bezugselektrode verbunden ist und quer zu dieser Elektrode und der Zelle einen Gleichstrom mit einer solchen Richtung liefert, dass die Spannung der Bezugselektrode positiv ist, und einen Differentialverstärker (14) mit einem mit der Bezugselektrode verbundenen Eingang und einem Ausgang (16), wobei dieser Ausgang die positive Löschspannung Vef liefert, welcher von dem die Zelle durchquerenden Bezugsstrom ($I_{ref}$) geregelt wird, wobei der Bezugsstrom ($I_{ref}$) so geregelt ist, dass die Löschspannung einen geeigneten Wert aufweist.

**Claim**

Electrolytic display cell comprising a film (8) of electrolytic solution between semitransparent display electrodes (4a, 4b, 4c) and a counter-electrode (6), a negative potential source (22) for display, means for generating a positive erasure potential, and switch means (18a, 18b, 18c) adapted to connect each display electrode (4a, 4b, 4c) alternatively to the negative potential source (22) or to the means for generating a positive potential, characterized in that the means for generating the erasure potential comprise a reference electrode (10) disposed like the display electrodes in the cell, a generator (12) for a continuous reference current ($I_{ref}$) connected to the reference electrode and which delivers, across said electrode and the cell, a continuous current in such a sense that the reference electrode is at positive potential, a differential amplifier (14) having an input connected to the reference electrode and an output (16), said output delivering said positive erasure potential $V_{ef}$, which is controlled by the reference current ($I_{ref}$) through the cell, the reference current ($I_{ref}$) being adjusted such that the erasure potential has a predetermined value.

. —